# EUROPÄISCHE PATENTSCHRIFT

(11) **EP 1 402 711 B1**
(45) Veröffentlichungstag und Bekanntmachung des Hinweises auf die Patenterteilung: **23.03.2005**
(21) Anmeldenummer: 02760082.4
(22) Anmeldetag: 05.07.2002
(51) Int. Cl.: H04M 1/725, H04M 1/67, H04M 1/2745, H04M 1/275

(54) **MOBILTELEFON**
MOBILE TELEPHONE
TELEPHONE MOBILE

(30) Priorität: 05.07.2001 DE 10132585
(43) Veröffentlichungstag der Anmeldung: 31.03.2004
(73) Patentinhaber: SIEMENS AKTIENGESELLSCHAFT, 80333 München (DE)
(72) Erfinder: STEININGER, Martin, A-1210 Wien (AT)
(86) Internationale Anmeldenummer: PCT/DE2002/002472
(87) Internationale Veröffentlichungsnummer: WO 2003/005687

(56) Entgegenhaltungen:
- EP-A- 0 822 730
- EP-A- 0 969 644
- EP-A- 0 989 714
- WO-A-99/49583
- GB-A- 2 315 954

## Beschreibung

Die Erfindung betrifft ein Mobiltelefon mit mehreren Speichereinheiten.

Die rasante technische Entwicklung auf dem Gebiet der Mobilkommunikation hat in den letzten Jahren zur Entwicklung und Bereitstellung einer Vielzahl verschiedener Applikationen für Mobiltelefone geführt. So ist es bekannt, Mobiltelefone mit einem elektronischen Telefonbuch, einem elektronischen Adreßbuch oder einem elektronischen Terminkalender auszustatten. Derartige Applikationen greifen dabei auf persönliche Daten des Benutzers des Mobiltelefons, welche in Speichereinheiten des Mobiltelefons abgespeichert sind, zu.

Außerdem ist es bekannt, das elektronische Telefonbuch des Mobiltelefons zweckentfremdet zur Verwaltung von Geheimzahlen zu verwenden, indem beispielsweise anstatt eines Namens eines Kommunikationspartners der Name einer Kreditkarte und anstatt einer dem Namen zugeordneten Telefonnummer die Kreditkartennummer abgespeichert wird. Nachteilig daran ist, daß jeder, der zur Nutzung des Mobiltelefons zu Kommunikationszwecken berechtigt ist, gleichzeitig auch zum Zugriff auf diese geheimen persönlichen Informationen/Daten eines Benutzers berechtigt ist.

Dokument WO-A-9949583 beschreibt ein Mobiltelefon, das außer dem Teilnehmeridentifizierungsmodul (SIM) eine Speichereinheit zur Speicherung von Benutzerinformationen aufweist.

Der Erfindung liegt nun die Aufgabe zugrunde, ein Mobiltelefon anzugeben, das einen praktikablen und gleichzeitig sicheren Zugriff auf im Mobiltelefon abgespeicherte persönliche Daten eines Benutzers des Mobiltelefons ermöglicht.

Diese Aufgabe wird durch die Merkmale des unabhängigen Anspruchs gelöst. Vorteilhafte und zweckmäßige Weiterbildungen ergeben sich aus den abhängigen Ansprüchen.

Erfindungsgemäß ist also - beispielsweise neben anderen Speichereinheiten - zusätzlich zu einer bekannten Speichereinheit zur Speicherung von Teilnehmeridentifizierungsinformationen eine zweite Speichereinheit zur Speicherung von Benutzeridentifizierungsinformationen und eine dritte Speichereinheit zur Speicherung persönlicher Informationen eines Benutzers vorgesehen. Dadurch wird bei der Verwendung eines Mobiltelefons zwischen dem Zugriff auf Dienste des Mobilfunksystems und dem Zugriff auf persönlich Daten des Benutzers, die im Mobiltelefon abgespeichert sind, unterschieden. Durch die Trennung zwischen Teilnehmeridentifizierung und Benutzeridentifizierung ist es möglich, einem bestimmten Personenkreis zwar die Inanspruchnahme von Diensten eines Mobilfunksystems mittels des Mobiltelefons zu gewähren, diesen Personenkreis aber gleichzeitig von dem Zugriff auf bestimmte persönliche Daten eines Benutzers oder einer Benutzergruppe auszuschließen und umgekehrt. Dies ermöglicht beispielsweise ein unkompliziertes Verleihen oder eine gemeinsame Nutzung eines Mobiltelefons.

Bei der Teilnehmeridentifizierung kann es sich dabei um die als solche bekannte Teilnehmeridentifizierung eines Mobilfunksystems handeln, bei welcher eine eingegebene Geheimzahl mit einer auf einem Teilnehmeridentifizierungsmodul (SIM) abgespeicherten Zahl verglichen wird und bei Übereinstimmung ein Zugriff auf Dienste eines entsprechenden Mobilfunksystems gewährt wird. In der Regel erfolgt nach erfolgreicher Eingabe der Geheimzahl automatisch ein Einbuchen in das entsprechende Mobilfunksystem, wodurch die Annahme bzw. der Aufbau eines Anrufes über das Mobilfunksystem ermöglicht wird.

Bei der Benutzeridentifizierung kann es sich um eine von der Teilnehmeridentifizierung separate Eingabe einer Geheimzahl, die von oben genannter Geheimzahl verschieden sein kann, handeln. Dies ermöglicht auch den Zugriff auf persönliche Daten eines Benutzers ohne das versuchte Einbuchen des Mobiltelefons in ein Mobilfunksystem. Dies ist beispielsweise auch bei einer Eingabe eines neuen Adreßbucheintrags in einem Flugzeug von Vorteil, da das versuchte Einbuchen in ein Mobilfunksystem in einem Flugzeug verboten ist.

Bei den Speichereinheiten kann es sich um voneinander unabhängige Speichereinrichtungen, wie beispielsweise Speicherbausteine, oder um verschiedene Speicherbereiche einer Speichereinrichtung handeln.

Die Erfindung wird im Folgenden anhand bevorzugter Ausführungsbeispiele näher beschrieben, zu deren Erläuterung nachstehende Figur dient:

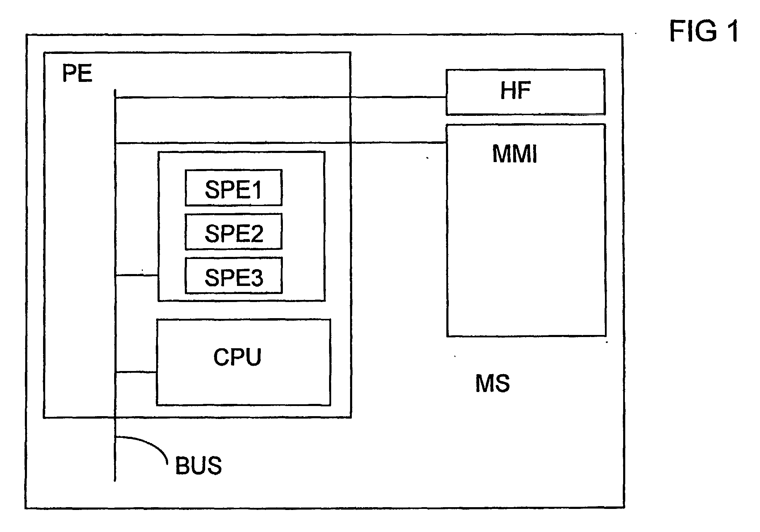

Figur 1 Blockschaltbild einer Mobilstation.
Figur 1 zeigt eine Mobilstation MS (Mobiltelefon), welche eine Bedieneinrichtung MMI eine Hochfrequenzeinrichtung HF und eine Prozessoreinrichtung PE enthält. Die Bedieneinrichtung MMI umfaßt eine Anzeigeeinheit, insbesondere ein Display, und eine Eingabeeinrichtung, insbesondere zur Eingabe von Identifizierungsinformationen, die beispielsweise Tasten oder Softkeys umfaßt. Die Bedieneinrichtung MMI kann auch als Touchscreen ausgebildet sein.

Zur Steuerung der Mobilstation MS, zur Ansteuerung der Anzeigeeinheiten und der Verfahren, welche durch die Mobilstation ausgeführt werden, ist eine programmgesteuerte Prozessoreinrichtung PE, wie beispielsweise ein Mikrocontroller vorgesehen, der auch einen Prozessor CPU und eine Speichereinrichtung, welche zumindest drei Speichereinheiten SPE1,2,3 enthält, umfassen kann. Insbesondere ist die Prozessoreinrichtung zum Vergleich zwischen eingegebenen und gespeicherten Identifizierungsinformationen eingerichtet und zum vom Vergleichsergebnis abhängigen Freigeben bzw. Sperren von Speichereinheiten.

Je nach Ausführungsvariante können dabei innerhalb oder außerhalb der Prozessoreinrichtung PE weitere - der Prozessoreinrichtung zugeordnete, zur Prozessoreinrichtung gehörende, durch die Prozessoreinrichtung gesteuerte oder die Prozessoreinrichtung steuernde - Komponenten, wie beispielsweise ein digitaler Signalprozessor oder weitere Speichereinrichtungen angeordnet sein, deren prinzipielle Funktion im Zusammenhang mit einer Prozessoreinrichtung zur Steuerung einer Mobilstation einem Fachmann hinreichend bekannt ist, und auf welche daher an dieser Stelle nicht näher eingegangen wird. Die unterschiedlichen Komponenten können über ein Bussystem BUS oder Ein-/Ausgabeschnittstellen und gegebenenfalls geeignete Controller mit dem Prozessor CPU Daten austauschen.

Je nach Ausführungsvariante kann die Speichereinrichtung, bei der es sich auch um einen oder mehrere flüchtige und/oder nicht flüchtige Speicherbausteine handeln kann, oder Teile der Speichereinrichtung als Teil der Prozessoreinrichtung PE (in Figur dargestellt) realisiert sein oder als externe Speichereinrichtung (in Figur nicht dargestellt) realisiert sein, die außerhalb der Prozessoreinrichtung PE lokalisiert ist und mittels geeigneter Schnittstellen oder eines geeigneten Bussystems mit der Prozessoreinrichtung PE verbunden ist. Bei der Speichereinrichtung kann es sich auch um verteilte Speicherelemente handeln, die an verschiedenen Stellen der Mobilstation realisiert sein können. Insbesondere kann es sich bei der Speichereinrichtung oder bei einem Teil der Speichereinrichtung um eine auswechselbare Chipkarte, wie beispielsweise ein Teilnehmeridentifizierungsmodul, handeln.

In der Speichereinrichtung sind die Programmdaten, wie beispielsweise die Steuerbefehle oder Steuerprozeduren, die zur Steuerung der Mobilstation und zur Versetzung der Mobilstation in verschiedene Betriebszustände herangezogen werden, gespeichert. Darüber hinaus sind in der Speichereinrichtung, insbesondere in deren einzeln sperr- bzw. freigebbaren Speichereinheiten SPE1,2,3, Benutzeridentifizierungsinformationen, persönliche Informationen eines Benutzers und Teilnehmeridentifizierungsinformationen abgespeichert. Die persönlichen Informationen eines Benutzers umfassen dabei zumindest eine der folgenden elektronisch gespeicherten Informationen: Telefonbuch, Adreßbuch, Kreditkartennummer, Paßwort und/oder eine Geheimzahl.

Im folgenden sind beispielhaft Ausführungsvarianten zum Zugriff auf persönliche Informationen eines Benutzers beschrieben, welche einzeln aber auch in beliebigen Kombinationen durch die Erfindung umfaßt sind:

Zunächst befindet sich das Mobiltelefon im ausgeschalteten Zustand. Mit der Betätigung einer EIN-Taste wird das Mobiltelefon eingeschaltet und der Benutzer durch eine entsprechende auf der Anzeigeeinheit dargestellte Frage gefragt, ob er Mobilfunkdienste in Anspruch nehmen will, oder ob er persönliche Informationen auslesen möchte.

Entscheidet sich der Benutzer durch eine entsprechende Eingabe über die Eingabeeinheit für die Inanspruchnahme eines Mobilfunkdienstes, so wird er in einem nächsten Schritt zur Eingabe der Teilnehmeridentifizierungsinformationen aufgefordert. Nach Eingabe entsprechender Identifizierungsinformationen durch den Benutzer werden diese mit in der ersten Speichereinheit SPE1 gespeicherten Teilnehmeridentifizierungsinformationen verglichen und bei Übereinstimmung der Zugriff auf Mobilfunkdienste gewährt. Dies ist mit einem Einbuchen in das Mobilfunknetz und entsprechende mobilfunksystemspezifische Identifizierungsprozeduren verbunden, die als solche hinreichend bekannt sind, und auf welche daher an dieser Stelle nicht näher eingegangen wird. Der Zugriff auf persönliche Daten eines Benutzers bleibt jedoch auch nach erfolgreicher Teilnehmeridentifizierung zumindest zunächst gesperrt. Eine Ausführungsvariante der Erfindung sieht vor, dass die Eingabe von Benutzeridentifizierungsinformationen und die damit verbundene Benutzeridentifizierung und der damit gewährte Zugriff auf persönliche Informationen eines Benutzers auch nach einer erfolgreichen Teilnehmeridentifizierung durchführbar ist.

Entscheidet sich der Benutzer dagegen durch eine entsprechende Eingabe über die Eingabeeinheit für das Auslesen persönlicher Informationen und deren Darstellung auf der Ausgabeeinheit, so wird er in einem nächsten Schritt zur Eingabe der Benutzeridentifizierungsinformationen aufgefordert. Nach Eingabe entsprechender Identifizierungsinformationen durch den Benutzer werden diese mit in der zweiten Speichereinheit SPE2 gespeicherten Benutzeridentifizierungsinformationen verglichen und bei Übereinstimmung der Zugriff auf persönliche Informationen des Benutzers oder einer entsprechenden Benutzergruppe gewährt. Zu diesem Zweck können die persönlichen Informationen gemäß den Einträgen eines elektronischen Telefonbuches in der zweiten Speichereinheit SPE2 abgespeichert sein, aus dieser ausgelesen und auf der Ausgabeeinheit dargestellt werden. So wird beispielsweise nach der menügesteuerten Auswahl/Eingabe der Bezeichnung "Kreditkarte" die Kreditkartennummer dargestellt oder nach Auswahl/Eingabe der Bezeichnung "Passwort PC" das Passwort für einen PC des Benutzers dargestellt. Die Eingabe oder Änderung derartiger Einträge entspricht der an sich bekannten Eingabe oder Änderung von Einträgen eines elektronischen Telefonbuches. Der Zugriff auf Mobilfunkdienste bleibt jedoch auch nach erfolgreicher Benutzeridentifizierung zumindest zunächst gesperrt. Eine weitere Ausführungsvariante der Erfindung sieht vor, dass die Eingabe von Teilnehmeridentifizierungsinformationen und die damit verbundene Teilnehmeridentifizierung und der damit gewährte Zugriff auf Mobilfunkdienste auch nach einer erfolgreichen Benutzeridentifizierung durchführbar ist.

Eine Ausführungsvariante der Erfindung sieht vor, dass die Teilnehmeridentifizierungsinformationen in einer Speichereinheit abgespeichert ist, welche in einer auswechselbaren Chipkarte, insbesondere einem Teilnehmeridentifizierungsmodul, enthalten ist, wohingegen die Benutzeridentifizierungsinformationen und die persönlichen Informationen eines Benutzers in festen Speichereinheiten des Mobiltelefons abgespeichert sind.

Eine andere Ausführungsvariante der Erfindung sieht vor, dass die Teilnehmeridentifizierungsinformationen, die Benutzeridentifizierungsinformationen und die persönlichen Informationen eines Benutzers in Speichereinheiten abgespeichert sind, welche in einer auswechselbaren Chipkarte, insbesondere einem Teilnehmeridentifizierungsmodul, enthalten sind.

Schließlich sieht eine andere Ausführungsvariante der Erfindung vor, dass die Teilnehmeridentifizierungsinformationen, und die Benutzeridentifizierungsinformationen in Speichereinheiten abgespeichert sind, welche in einer auswechselbaren Chipkarte, insbesondere einem Teilnehmeridentifizierungsmodul, enthalten sind, wohingegen die persönlichen Informationen eines Benutzers in einer festen Speichereinheit des Mobiltelefons abgespeichert sind.

## Patentansprüche

1. Mobiltelefon (MS)
- mit einer ersten Speichereinheit (SPE1) zur Speicherung von Teilnehmeridentifizierungsinformationen,
- mit einer zweiten Speichereinheit (SPE2) zur Speicherung von Benutzeridentifizierungsinformationen,
- mit einer dritten Speichereinheit (SPE3) zur Speicherung persönlicher Informationen eines Benutzers,
- mit einer Einrichtung zur Eingabe von Identifizierungsinformationen (MMI),
- mit einer Prozessoreinrichtung (PE), die derart eingerichtet ist,
- daß das Mobiltelefon (MS) zum Einbuchen in ein Mobilfunknetz berechtigt ist, wenn eingegebene Identifizierungsinformationen mit gespeicherten Teilnehmeridentifizierungsinformationen übereinstimmen, und
- daß der Zugriff auf die dritte Speichereinheit freigegeben wird, wenn eingegebene Identifizierungsinformationen mit gespeicherten Benutzeridentifizierungsinformationen übereinstimmen.

2. Mobiltelefon nach Anspruch 1,
- bei dem die Teilnehmeridentifizierungsinformationen mit den Benutzeridentifizierungsinformationen identisch sind.

3. Mobiltelefon nach einem der vorhergehenden Ansprüche,
- mit einer auswechselbaren Chipkarte, welche zumindest eine der drei Speichereinheiten umfaßt.

4. Mobiltelefon nach einem der vorhergehenden Ansprüche,
- bei dem die Eingabe der Benutzeridentifizierungsinformationen erst nach erfolgreicher Eingabe der Teilnehmeridentifizierungsinformationen möglich ist.

5. Mobiltelefon nach einem der vorhergehenden Ansprüche,
- bei dem die Eingabe der Benutzeridentifizierungsinformationen vor erfolgreicher Eingabe der Teilnehmeridentifizierungsinformationen möglich ist.

6. Mobiltelefon nach einem der vorhergehenden Ansprüche,
- bei dem die persönlichen Informationen eines Benutzers, zumindest eine der folgenden Informationen umfaßt: Telefonbuch, Adreßbuch, Kreditkartennummer, Paßwort und/oder eine Geheimzahl.

## Claims

1. Mobile telephone (MS)
- with a first storage unit (SPE1) for storing subscriber identification information,
- with a second storage unit (SPE2) for storing user identification information,
- with a third storage unit (SPE3) for storing personal information of a user,
- with a device for inputting identification information (MMI),
- with a processor device (PE) which is set up in such a manner that
- the mobile telephone (MS) is authorized for registering in a mobile radio network when identification information input matches stored subscriber identification information, and
- the access to the third storage unit is enabled when identification information input matches stored user identification information.

2. Mobile telephone according to Claim 1,
- in which the subscriber identification information is identical with the user identification information.

3. Mobile telephone according to one of the preceding claims,
- with an exchangeable chip card which comprises at least one of the three storage units.

4. Mobile telephone according to one of the preceding claims,
- in which the input of the user identification information is only possible after the successful input of the subscriber identification information.

5. Mobile telephone according to one of the preceding claims,
- in which the input of the user identification information is possible before a successful input of the subscriber identification information.

6. Mobile telephone according to one of the preceding claims,
- in which the personal information of a user comprises at least one of the following information items: telephone book, address book, credit card number, password and/or a secret number.

## Revendications

1. Téléphone mobile (MS)
- avec une première unité de mémoire (SPE1) pour conserver en mémoire des informations d'identification d'abonné,
- avec une deuxième unité de mémoire (SPE2) pour conserver en mémoire des informations d'identification d'utilisateur,
- avec une troisième unité de mémoire (SPE3) pour conserver en mémoire des informations personnelles d'un utilisateur,
- avec un dispositif d'introduction d'informations d'identification (MMI),
- avec un dispositif à processeur (PE) qui est établi de telle sorte que
- le téléphone mobile (MS) soit autorisé à se relier à un réseau de radiotéléphonie mobile lorsque des informations d'identification introduites correspondent à des informations d'identification d'abonné conservées en mémoire
- et que l'accès à la troisième unité de mémoire est libéré lorsque des informations d'identification introduites correspondent à des informations d'identification d'utilisateur conservées en mémoire.

2. Téléphone mobile selon la revendication 1, dans lequel les informations d'identification d'abonné sont identiques aux informations d'identification d'utilisateur.

3. Téléphone mobile selon l'une des revendications précédentes, avec une carte à puce échangeable qui comporte au moins une des trois unités de mémoire.

4. Téléphone mobile selon l'une des revendications précédentes, dans lequel l'introduction des informations d'identification d'utilisateur n'est possible qu'après le succès de l'introduction des informations d'identification d'abonné.

5. Téléphone mobile selon l'une des revendications précédentes, dans lequel l'introduction des informations d'identification d'utilisateur est possible avant le succès de l'introduction des informations d'identification d'abonné.

6. Téléphone mobile selon l'une des revendications précédentes, dans lequel les informations personnelles d'un utilisateur comprennent au moins l'une des informations suivantes: répertoire téléphonique, carnet d'adresses, numéro de carte de crédit, mot de passe et/ou numéro secret.
